# EUROPEAN PATENT APPLICATION

(11) **EP 3 643 827 A1**
(43) Date of publication of application: **29.04.2020**
(21) Application number: 19176487.7
(22) Date of filing: 24.05.2019
(51) Int. Cl.: D04H 3/14, D04H 3/007, B32B 27/12, A47C 31/11, A61H 33/06

(54) **DISPOSABLE SAUNA HYGIENE PRODUCTS AND PROCESS FOR USING DISPOSABLE SAUNA HYGIENE PRODUCTS**

(30) Priority: 24.05.2018 HU 1800175; 16.05.2019 HU 1900160
(71) Applicant: Vassné Bacsa, Ágnes, 5100 Jászberény (HU); Bacsa, Ferenc, 1037 Budapest (HU)
(72) Inventor: Vassné Bacsa, Ágnes, 5100 Jászberény (HU); Bacsa, Ferenc, 1037 Budapest (HU)
(74) Representative: Kacsuk, Zsófia

(57) **Abstract**

The present invention relates to a sauna hygiene product, in particular sauna sheets and similar sanitary towels and sanitary cloths, such as seat, back, and footwear used in a sauna.; The essence of the product is that it is made of disposable, absorbent and rinsable material weighing from 10 g / m2 to 120 g / m2.

The present invention also relates to the use of a sweat-enhancing, absorbent and rinsable material of 10 g / m2 to 120 g / m2 as a disposable sauna hygiene product.

The present invention further relates to a process for using a sauna hygiene product according to the invention, comprising the steps of:
a) Sauna usage with a disposable sauna hygiene product;
b) rinsing away the sweat, dirt, toxins from the sauna hygiene product upon completion of the sauna;
c) laying out the sauna hygiene product after rinsing the sauna hygiene product to dry after manually twisting;
d) re-use the sauna hygiene product during repeated sauna sessions, even several times a day;
e) at the end of the sauna day, the used sauna hygiene products are collected in a selective container.

## Description

The present invention relates to disposable sauna hygiene products, in particular a bath towels, as well as sauna cloths and sanitary towels having similar properties, such as seat, back, and shawls, a headscarf or a towel covering the entire floor of the sauna cabin. The present invention further relates to the use of a rinseable material having a weight of 10 g / m 2 to 120 g / m 2 for this purpose. The present invention also relates to a process for using such disposable sauna hygiene products for personal and corporate hygiene, cost efficiency and environmental protection.

Currently, in the public saunas used by the wider public, the customers are usually provided with the guest receiving a traditional textile sauna sheet or bringing their own textile sheet. No seat, back, foot, or head pads that are specifically placed under or behind the various parts of the body are used. For the same day's repeated sauna use, the sauna user usually uses the same glossy textile sheet as many times as he uses the sauna service. Think about how much and how many people have body fluids, toxins, and so on. is placed on the floor of the sauna cab during the day from the repeatedly sweated textile sheets, thus greatly contaminating the hygiene and air of the sauna cab floor, impairing the hygiene, comfort and safety of both you and your sauna companions.

Another option is to have the customers get a clean textile sheet every 3-5 days during the day. This, in turn, increases the number of washes, resulting in a significant increase in costs and environmental damage by contaminating the Earth's water supply with detergents and chemicals.

These disadvantages and detrimental factors are eliminated by the use of disposable sauna hygiene products, in particular sauna sheets and similar sanitary towels, sauna hygiene cloths in the field of saunas.

Disposable sauna hygiene products, especially sauna sheets and similar properties, sauna hygiene cloths, and the recommended sauna procedure, combine to provide multiple, efficient, comfortable, hygienic, economical, and environmentally friendly criteria.

The environmentally friendly, cost-effective use of disposable sauna hygiene products can ensure individual and common sauna hygiene, sauna cabin hygiene, thereby increasing the comfort of sauna use, and the safety of saunas. After drying, it should be reused for a few more days (especially on the day) and should not be disposed of after use so it does not burden the environment.

The object of the present invention is to provide disposable sauna hygiene products, especially sauna sheets and similar sanitary towels and sanitary napkins, to provide and ensure improved hygiene, which, taking into consideration cost-effective economic considerations and can be disposed of or recycled without harming the environment, but at a reasonable cost.

It is a further object of the present invention to provide in addition to the above advantages of a sauna cloth with a disposable sauna liner and such, to provide an enhanced steaming effect relative to conventional textile sheets in order to intensify the detoxification process. A further challenge for the invention is to provide enhanced protection of detergents, chemicals and wastes in addition to individual and common hygiene and cost-effectiveness.

The object is solved by the sauna hygiene products according to claim 1, the use according to claim 8 and the process according to claim 10. Some preferred embodiments are defined in the dependent claims.

The object of the present invention is preferably solved by disposable sauna hygiene products, in particular a bath towel and similar sanitary towels and sanitary napkins having a weight of 10 g / m 2 to 120 g / m 2, hydrophobic, spunbond or) 100% non-woven fabric made of polypropylene fibers. This non-woven fabric is a textile-friendly, skin-friendly, soft-touch soft material that is a great substitute for traditional textiles used for this purpose (textile sheets, towels), but also has a good damping effect on sauna sheets and even in low temperature saunas, results in rapid and intense sweating, thereby detoxifying.

The object of the present invention can be achieved even more efficiently with sauna hygiene products, mainly a bath towel or a similar type of sauna cloth and sauna hygiene cloths made of the nonwoven fabric of one side 25 0.01 mm - 0.9 mm thick and 3 g / m2. - coated with a layer of polyethylene film weighing 50 g / m2.

Alternatively, a combination of 100-10% viscose and 0-90% polyethylene, or 100-10% viscose and 0-90% polyester as alternatives to the above products are contemplated. Weighing in from 10 g / m2 to 120 g / m2, these materials differ only in comfort and exclusivity from 100% polypropylene.

Favorable products can be obtained from materials having a 100% viscose content of 10 g / m 2 to 120 g / m 2.

Likewise, products with favorable properties can be obtained from materials having a weight of 10 g / m 2 to 120 g / m 2 made from 100-10% polypropylene and 0-90% woodpulp (woodpulp) or 100-10% polyester and 0-90% woodpulp.

Finally, it is also possible that the above products are coated on one side with a film of polyethylene having a thickness of 0, 01 mm to 0.9 mm and a weight of 3 g / m2 to 50 g / m2, preferably 3 g / m2 to 30 g / m2. it is particularly beneficial in terms of increased hygiene safety, increased tensile strength of the material, and enhancement of steaming effect.

The present invention is based on the discovery that a model of a polypropylene nonwoven cosmetic blanket that exerts an increased warmth at room temperature on a wearer in a higher temperature room, such as a sauna, can result in increased heat and consequently more intense sweating, covered with a sauna cloth of this material and a sauna cloth with similar properties. Thus, with such a bath towel and a similar type of sauna cloth, the "steaming effect" of the sheet, the cloth, will result in increased sweating, thereby detoxification. This " steaming effect" is due to the fiber structure of the breathable material due to the technology of the nonwoven fabric. It has also been found that in a lower temperature sauna, you can achieve the same sweating with this disposable bath towel and similar sauna towel as in a higher temperature sauna bath or without a sauna bath, with the benefit that the head does not get hot, so you can spend a longer time in the sauna. This method has many advantages over the use of high temperature saunas and is also important for the physiological effects they achieve.

Further, based on own experience, additional disposable sauna hygiene products that provide full hygiene of using the sauna, the production of sanitary towels that can be placed under different parts of the body, and methods of using them have been identified in the field of sauna to address the current they are unresolved and represent a serious source of hygiene and infectious danger.

The advantage of disposable sauna hygiene products, sauna sheets and similar sanitary towels and sanitary napkins over traditional textile sheets is that the special material of disposable sauna sheets and similar properties is a skin-friendly, non-woven, non-woven, non-woven sweating is much more intense on the wrapped body surface, the excretion of toxins is increased and the body is detoxified.

The use of disposable sauna sheets and similar sauna cloths and sanitary towels ensures personal and social hygiene, as well as the hygiene of the air and floor of the sauna cabin, by rinsed in the shower, it is easy to wash away the fibers of the disposable sauna towel and similar sanitary towels and sauna hygiene cloths, sweat and toxins are eliminated.

Twisted disposable bath sheets and similar sanitary towels dry quickly, so the next sauna usage can be done with clean, or even dry disposable bath sheets and similar sanitary towels. This increases the comfort level of the sauna user, the hygiene of the sauna cabin and the safety of the common hygiene.

Fibers of disposable bath sheets and similar sanitary towels and sanitary cloths do not absorb the toxins and impurities present in the sweat, so they can be easily rinsed with shower water during a shower.

These disposable sauna hygiene products are light-weight, both dry and wet, and are therefore easy to handle for sauna users, while traditional textile sheets are not suitable for these operations due to their heavy weight, which is damp, and slow to dry.

The usual absorbent properties of traditional textile sheets are not determinative for the efficiency of the sauna, as the sauna user does not constantly wipe themselves, and after using the sauna they usually go to have a shower without wiping, and after showering it will not wipe themselves with a towel littered with sweat.

In the area of the sauna, the use of disposable sauna sheets and similar sanitary towels and sanitary cloths has a very important positive effect on hygiene.

The disposable sauna sheet is designed to replace the traditional textile sheets currently used, thereby providing and maintaining individual and common sauna hygiene, with significant cost savings and environmental protection. The traditional textile sheets currently used during the sauna are saturated with sweat, dirt, toxins, microbes, and during repeated sauna use, they contaminate and infect the sauna cabin. All of this endangers the health and hygiene of the sauna users and reduces their comfort.

The **disposable sauna sheets** provide a light, soft, comfortable feel, and can be rinsed between showers so you always have a clean, hygienic sheet for your sauna. This ensures your comfort and does not pollute the sauna cabin, its floor and the air, so everyone complies with the common sauna hygiene by ensuring their own individual hygiene.

After rinsing, they can be tucked together and twisted with hands, and thanks to their material, they dry in no time. Conventional textile sheets are not suitable for these operations because of their heavy moisture content and slow drying time.

Traditional textile sheets issued for several saunas a day are not suitable for cleaning and quick drying between two sauna usages, so repeated use of sweat-soaked textile sheets, which are already filled with toxins and other contaminants, taints the sauna cabin floor, to the guest, so it is not safe for the hygiene of others to be infected.

The clean, traditional textile sheets provided at each sauna use increase hygiene safety, but their cumulative washing contributes to environmental degradation by wasting the Earth's water supply and detergents and chemicals, a significant cost-increasing factor.

In addition, the disposable bath towel covers the body as a result of its sweat-enhancing effect, resulting in increased heat production, thus increasing the sweating and thus detoxification, which is an important physiological aspect of sauna use.

The application of currently used traditional textile sauna cloths are not suitable for multiple daily sauna usages for comfort and hygiene reasons, as sweat-filled textile sauna clothing provides a feeling of discomfort due to the accumulation of dirt and sweat, and repeated use of sauna , thus individual and common hygiene.

Therefore, a more practical, comfortable, hygienic solution is the use of **disposable sauna clothing** according to our recommended sauna procedure, that is, after each sauna use, the sauna clothing is rinsed by the sauna user during the shower, so the sauna user re-enters the sauna with clean sauna clothing. So, disposable sauna clothing ensures comfort, hygiene, economy and environmental protection even when you use the sauna several times a day. Due to its light weight, ability to be twisted easily after rinsing, and quick drying, the sauna user can keep disposable sauna clothing between two sauna usages while traditional textile sauna clothing is not used repeatedly to prevent colds. In addition, as with the material, as with the disposable sauna towel, sweating intensifies and increases toxin excretion when covering the body surface. Material: listed materials except absorbent paper and impregnated absorbent paper

The **disposable sauna seating cloth** is designed to protect the occupants' seated buttocks and thighs from the sweat and dirt on the cabin floor, as well as the floor from body fluids.

The sauna users enter the cabin barefoot guest and sit in sitting position not only on the floor but also on the "upstairs" seating where others sit and lie. Leaning forward, sweat drips off the floor, which can be a bench, depending on the height of the sauna floor. This is what grips this draining sweat is caught by **disposable sauna foot cloth,** which helps protect the floor from the perspiration of guests and even foot infections (foot and nail fungus)!

The use of traditional textile sheets is not intended to provide protection against foot contamination. The disposable sauna foot cloth can also provide this protection.

The **disposable sauna headscarf** provides protection for guests' back surfaces when they lean on the sauna floor or lie down on the bench and put it under their backs and heads to protect this part of the body. Because of their size, traditional textile sheets are not suitable for covering the entire body in a lying position. Thus, the sauna guest's head comes into contact with the bare floor, where several sauna users were sitting, standing and dripping their sweat.

Of course, **disposable seating cloths, headscarves and foot cloths** can be rinsed in the shower after use and can be cleanly reused for the next sauna use. This provides greater hygiene safety. Disposable sauna cloths are designed to cover the entire floor of the sauna cabin due to their size. This is especially necessary for the hygiene of the sauna cabin when using honey, chocolate, or other materials for group sauna sessions to enhance the sauna experience. Due to their large size, the sauna wraps are suitable for covering the entire sauna cabin, thus ensuring maximum cleanliness and hygiene of the sauna. At the end of the group sauna session, the cabin can be cleaned for the next sauna session by removing the dirty disposable cloth and laying down the new clean blanket.

Therefore, overall, the most hygienic, cost-effective, and environmentally friendly solution is the use of disposable sauna hygiene products, especially disposable sauna sheets and similar sanitary towels and sanitary cloths.

We recommend the use of disposable sauna sheets and similar sanitary towels and sanitary cloths to replace the following methods while maintaining or improving the quality of the sauna service, for hygiene safety, cost efficiency and environmental protection.
a) If the institution provides the sauna guest with one piece of traditional textile sheets for daily sauna use, and the sauna does not have the opportunity to change to a clean sheet for repeated sauna use during the day, this reduces the comfort of the sauna user, as they must reuse sweat-soaked, contaminated sheets.
   At the same time, the hygiene of the sauna guests and the sauna cabin is also reduced, as in the case of multiple sauna sessions, the sauna guest is already spreading a wet, soiled sheet of sweat on the sauna bench, so the contaminants of the saunas are exchanged and even infected. Not only their own dirt, but also the contamination of others, comes into contact with the sauna guests' skin through the sheets when they use it repeatedly, since they do not even remember which side of the sheet was in contact with the bench during the previous use. At the same time, sweat, dirt and toxins accumulated in the sheets are extremely unpleasant and unhealthy, so the sauna guest breathes not only its own smells and microbes rising from the sheets of others, but also breathes into the sauna cabin.
   In the sauna, several of our fellow human beings have their body fluids and dirt exchanging hands on the floor, on the traditional textile sheet. This happens even if the institution does not provide the sauna sheets, but instead they bring the sheets from the home, or from the hotel, and may just dry them at home or in the hotel room and not wash or replace them, and will take them dried-sweaty again to their next sauna session.
   These drawbacks can be eliminated with the disposable sauna cloth and sauna sheets and sanitary towels of similar properties using our **recommended sauna procedure.**
   Thus, during the sauna session, the impurities and toxins released from the body surface during heavy sweating, can be rinsed during the shower together with the sweat easily and fast from the the disposable sauna towel and similar sanitary sheets and the sanitary cloths, so the next sauna use will not infect the sauna cabin, endangering the common hygiene of the sauna.
   Disposable sauna sheets and similar sanitary towels and sanitary cloths are so light in weight and can be folded to such a small volume (a handful) that they quickly dry after being rinsed with a shower by manual twisting. This allows the sauna user to re-use their clean, dry sauna sheet and similar sanitary towels and sauna cloths during re-use of the sauna during the day. This increases the comfort level of the sauna.
   Fibers from conventional textile sheets make it more difficult to remove contaminants by rinsing under running water, and the weight of a traditional sheet is not conducive to guest rinsing after use and twisting to dry. At the same time, the rinse of disposable sauna sheets and similar sanitary towels and sauna hygiene cloths is equivalent to the ease of rinsing the bathing suits, which is natural for all guests in the shower. All this contributes to the increased hygiene of the sauna cabin, to the saunas guests' sense of safety and to the improvement of their comfort.
b) If the institution provides the guest with clean traditional textile sheets before every sauna session, the sauna area, the hygiene safety and comfort of the guest is assured, but since a guest can use up to 3-4 sheets or more, this will significantly increase the number of sheets. the cost of cleaning, unnecessary and harmful environmental pollution and waste. If the cost-effectiveness of the institution in this area is important while maintaining the standard of service, then the use of disposable sauna sheets and similar sanitary towels and sanitary cloths should be introduced following the procedure described in point (a).

However, disposable hygiene sheets are recommended to ensure complete individual and common hygiene as well. Thus, the low cost of disposable sauna sheets and similar sanitary towels and sauna hygiene sheets, headscarfs and footcloths can be used to replace the use of several conventional textile sheets, which results in significant laundry costs and thus significant environmental pollution. This allows notable cost savings, as another clean, traditional textile sheet is not given to the same sauna guest for each sauna session. At the same time, the comfort and hygiene of the sauna is assured and the sauna service provides a uniform, aesthetic look.

Disposable sauna sheets and similar sanitary towels and sanitary cloths **can be recycled after use as municipal, selective waste.**

One of the most intensive areas of the world's largest industries, the wellness industry, is washing large quantities of traditional textile sheets daily. The use of disposable sauna sheets and similar sauna cloths and sanitary towels **reduce the need for wash**ing, chemical cleaning, thereby avoiding waste and contamination of the valuable water resources of the Earth with detergents and chemicals.

Disposable sauna hygiene products, especially similar sanitary towels and sanitary cloths, and our recommended sauna procedure combine to ensure the comfort, hygiene, economic and environmental aspects required in a common sauna culture.

Our recommended sauna procedure - its uniqueness, novelty - and the combination of disposable sauna sheets, similar sanitary towels and sanitary cloths ensure the fulfillment of the fundamentally important criteria of a cultured sauna.

Hygiene protection requires that clean sauna textiles are used every time the sauna is used with practical, economical solutions. When showering after a sauna session, the sauna guest rinses out the disposable sauna sheet and similar sauna clothes, protective cloths during the shower, so he sauna can be used again with sweat and dirt-free clean textile. The material of the disposable sauna hygiene fabrics is suitable for easy rinsing and quick drying after manual twisting. During the next sauna session, clean or dry sauna hygiene fabrics do not contaminate and re-contaminate the sauna cabin and its air, providing protection for individual and common hygiene.

By repeating this process several times on sauna operation day, significant cost savings can be achieved by eliminating washing and ancillary costs, while contributing to environmental protection, reducing the wastage of water on the Earth, and detergent and chemical pollution. At the end of the sauna operation day, disposable sauna hygiene products can be recycled in a separate waste bin.

## Claims

1. Sauna hygiene product, in particular disposable sauna sheets and similar sanitary towels and sanitary cloths, such as sauna seat, back, and footwear, headgear and toweling, **characterized by** that it is made of disposable, absorbent and rinsing material 10 g/m2 - 120 g / m2.

2. Sauna hygiene product according to Claim 1, **characterized by** that it comprises a combination of 0-100% viscose and 100-0% polyethylene, preferably 10-100% viscose and 90-0% polyethylene.

3. Sauna hygiene product according to **characterized by** claim 1, that it comprises a combination of 0-100% viscose and 100-0% polyester, preferably 10-100% viscose and 90-0% polyester.

4. Sauna hygiene product according to claim 1, **characterized by** that it comprises a combination of 0-100% polypropylene and 100-0% woodpulp, preferably a material 100% polypropylene and 90-0% woodpulp.

5. Sauna hygiene product according to claim 1, **characterized by** that it comprises a combination of 0 to 100% polyester and 100 to 0% woodpulp, preferably 10 to 100% polyester and 90 to 0% woodpulp.

6. Sauna hygiene product according to claim 1, **characterized by** that the material is spunbond or meltblown 100% polypropylene fibers.

7. Sauna hygiene product according to any one of claims 1 to 6, **characterized by** that one side of the product has a thickness of 0.01 mm to 0.9 mm and a thickness of 3 g / m2 to 50 g / m2, preferably 3 g / m2 to 30 g / m2. weight coated with a layer of polyethylene film.

8. The use of a absorbent and rinsable material of 10g / m 2 to 120 g / m 2 is a disposable sauna hygiene product, mainly a sauna sheets and similar sanitary towels and sanitary protective cloths, seat covers, and head-back and footwear.

9. Sauna hygiene product according to claim 8, **characterized by** that the material comprises a combination of 10-100% viscose and 90-0% polyethylene or a combination of 10-100% viscose and 90-0% polyester, or 10-100% polypropylene and 90% polypropylene. - Nonwovens containing 0% by weight of woodpulp or 10-100% of polyester and 90-0% by weight of woodpulp, spunbond or meltblown, made from 100% polypropylene fibers fabric material.

10. A process for using a sauna hygiene product in a sauna, comprising providing a sauna hygiene product according to any one of claims 1-7 and:
a) Sauna usage with a disposable sauna hygiene product;
b) rinsing away the sweat, dirt, toxins from the sauna hygiene product upon completion of the sauna;
c) laying out the sauna hygiene product after rinsing the sauna hygiene product to dry after manually twisting;
d) re-use the sauna hygiene product during repeated sauna sessions, even several times a day;
e) at the end of the sauna day, the used sauna hygiene products are collected in a selective container.
